# EUROPEAN PATENT APPLICATION

(11) **EP 1 385 248 A1**
(43) Date of publication of application: **28.01.2004**
(21) Application number: 03077156.2
(22) Date of filing: 09.07.2003
(51) Int. Cl.: H02G 9/10, H02B 7/08, H02B 1/50

(54) **Protective box for electronic and/or electrotechnical equipment with watertight and gastight cable introduction**

(30) Priority: 23.07.2002 NL 1021135
(71) Applicant: Odink & Koenderink B.V., 7482 CA Haaksbergen (NL)
(72) Inventor: Kienhuis, Johannes Henricus Maria, 7591 GA Denekamp (NL); Metternich, Stefan Herman Jeroen, 7541 AJ Enschede (NL)
(74) Representative: Riemens, Roelof Harm

(57) **Abstract**

Protective box for electronic and/or electrotechnical equipment, comprising:
- a housing having an inner space in which the electronic and/or electrotechnical equipment is accommodated;
- at least one cable introduction position which is provided in the housing and has a cable guided through it for connection to the electronic and/or electrotechnical equipment,
the cable comprising an outer sheath which surrounds at least one core.

The outer sheath has been removed from a length section of the cable at the location of the cable introduction position, and a length section of the outer sheath and an adjoining length section of the at least one exposed core are together embedded in a sealing compound which adjoins the housing for connecting the cable in a watertight and gastight manner to the electronic and/or electrotechnical equipment accommodated in the interior space.

## Description

The invention relates to a protective box, having a covering cap, which acts as an air chamber, for electronic and/or electrotechnical equipment according to the preamble of claim 1.

A box of this type is known, for example, from EP-A-0 929 136. This document shows a power supply box with connections to a plurality of wall sockets. The power supply box comprises a container which is open from below and is otherwise closed, which container can be moved up and down inside an underground housing space. The container delimits an interior space in which safety and measurement equipment for the power supply are accommodated. In the event of rising ground water and/or rain water, the container acts as an air chamber, so that the equipment accommodated therein is protected from contact with water. An underground cable enters the container via the open underside and is used to supply current. Furthermore, the container is connected, by means of a plurality of cables, to the sockets, which are each accommodated in separate, small containers.

A drawback of the known power supply box is that the current method of guiding the cables in an airtight manner in the protective box is laborious and requires considerable space and connection time.

It is an object of the present invention to at least partially overcome the abovementioned drawbacks and/or to create a useable alternative, and in particular to provide a reliable watertight and gastight protective box having a covering cap which acts as an air chamber for electronic and/or electrotechnical equipment. More particularly, it is an object of the invention to connect incoming and/or outgoing cables in the protective box in a simple, compact and gastight manner.

According to the present invention, this object is achieved by a protective box according to claim 1. In this case, the protective box comprises a housing having an interior space in which electronic and/or electrotechnical equipment is accommodated. The housing is designed to function as an air chamber. In the housing there is at least one cable introduction position having a cable guided through it for connecting to the electronic and/or electrotechnical equipment. The outer sheath of the cable has been partially removed therefrom at the location of the cable introduction position. In additon, there is a sealing compound which on the one hand adjoins the housing and in which on the other hand adjoining parts of the outer sheath of the cable and at least an exposed length section of a core of the cable at the location of the stripped part of the cable are embedded. It has been found that in this way the protective box can be kept completely watertight and gastight. Small quantities of gas cannot leak out via the interior of the cable. As a result of a part of the outer sheath and the cable components located inside the outer sheath of the cable being separately embedded in the sealing compound, the cable introduction and therefore the entire protective box can be of completely watertight and gastight design.

In one particular embodiment, the cable is of a type which inside its outer sheath also comprises an earth shield which surrounds one or more cores, in particular a telecommunications cable. By removing part of the earth shield of that section of the cable which has had its outer sheath removed at the location of the cable introduction position, and also embedding part of the exposed earth shield in the sealing compound, it is advantageously also possible to design a completely watertight and gastight protective box for this type of cable.

More particularly, the earth shield is connected, at the location of the sealing compound, to a partially stripped earth wire which is also embedded in the sealing compound.

Further preferred embodiments of the invention are defined in the subclaims.

The invention also relates to a use of a protective box according to claim 10.

The invention will be explained in more detail on the basis of the appended drawing, in which:
Fig. 1 shows a cross-sectional view through an embodiment of a protective box according to the invention;
Fig. 2 shows a view in the direction indicated by arrow II in Fig. 1;
Figs. 3A, B and C show three steps of preparing a cable for introduction into the protective box shown in Fig. 1;
Fig. 4 shows a cross-sectional view in which the protective box comprises the housing part acting as an air chamber;
Fig. 5 shows a view on line V-V in Fig. 4;
Fig. 6 shows a partial view of the pressure frame shown in Fig. 4;
Fig. 7 shows a partial view of the housing part acting as an air chamber in Fig. 4;
Fig. 8 shows a partial view of the housing part for accommodating the electronic and/or electrotechnical equipment in Fig. 4; and
Fig. 9 shows a diagrammatic view of a protective box from Fig. 4 accommodated in an underground box, omitting the components shown in Figs. 6, 7 and 8.

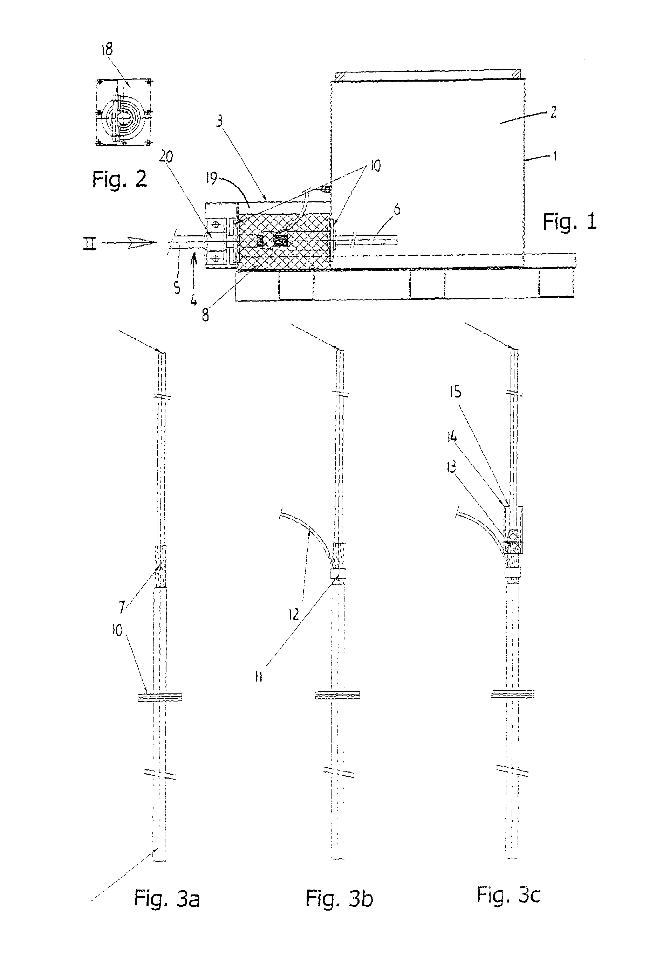

Fig. 1 shows a part of a protective box according to the invention. The protective box comprises a housing 1 having an interior space 2 which is intended to accommodate electronic and/or electrotechnical equipment. The housing 1 is intended to be covered from the top by a covering cap which acts as an air chamber. This specific application will be explained in more detail below with reference to the other drawings. The housing 1 comprises a cable introduction position 3 through which a cable 4 is guided, which cable 4 is intended to be connected to the electronic and/or electrotechnical equipment. The cable 4 comprises an outer sheath 5 which comprises one or more cores 6 and an earth screen 7 which surrounds these cores 6. According to the invention, connected length sections of the outer sheath 5, the earth shield 7 and the cores 6 are separately embedded in a sealed manner in a sealing compound 8. The result of this is that it is impossible for any gas exchange to take place between the interior space 2 and the surroundings via the interior of the cable 4.

A possible method for receiving the cable 4 in the cable introduction position will now be explained in more detail with reference to Figs. 1, 2 and 3A-C.

As can be seen from Fig. 3A, a grommet 10 is pushed over the outer sheath 5 of the cable 4. Then, the outer sheath 5 is stripped over a length section of the cable 4. This causes the earth shield 7 to be exposed. The exposed part of the earth shield 7 is removed over part of its length, so that the cores 6 are then exposed. Then, what is known as a coiled clamping spring 11 is fitted to the earth shield 7. After this, an earth wire 12 with a stripped end section is fitted between the earth shield 7 and the coiled clamping spring 11. The separate cores 6 are moved away from one another so that they are then in the form of separate cores 6. A tape 13 is wound around the end of the earth shield 7. Then, a sleeve 14 is pushed over the cores 6 and the tape 13. Via its open end 15, the sleeve 15 is filled with a first part of the sealing compound 8. In the process, the cores 6 have to be kept well spread and can if desired be moved to and fro slightly, so that the sealing compound 8 can successfully flow between the cores 6. Then, a second grommet 10 is pushed over the cable 4 until it reaches the free end of the sleeve 14.

One grommet 10 of the cable 4 which has been stripped and partially embedded in sealing compound in this way is positioned in a complementary recess in a wall of the housing 1, while the other grommet 10 of the cable is positioned in a complementary recess in an end plate 18 of a filling shell 19 connected to the housing 1. The cable 4 is fixed to the end plate 18 by means of a saddle bracket 20. The filling shell 19 with the partly stripped cable 4 extending through it, with connected earth wire 12, is then filled with the remaining part of the sealing compound 8.

The sealing compound 8 is preferably formed by a curable filling compound, which can be poured into the shell in particular as a multicomponent potting compound and then cures to a soft elastic state. There is preferably no need to supply heat for the curing operation. The multicomponent potting compound is in particular based on hydrocarbon. Other sealing compounds are also possible, for example a multicomponent potting compound based on polyurethane. A certain degree of flexibility after curing is advantageous in connection with cable movements and loads imposed during use.

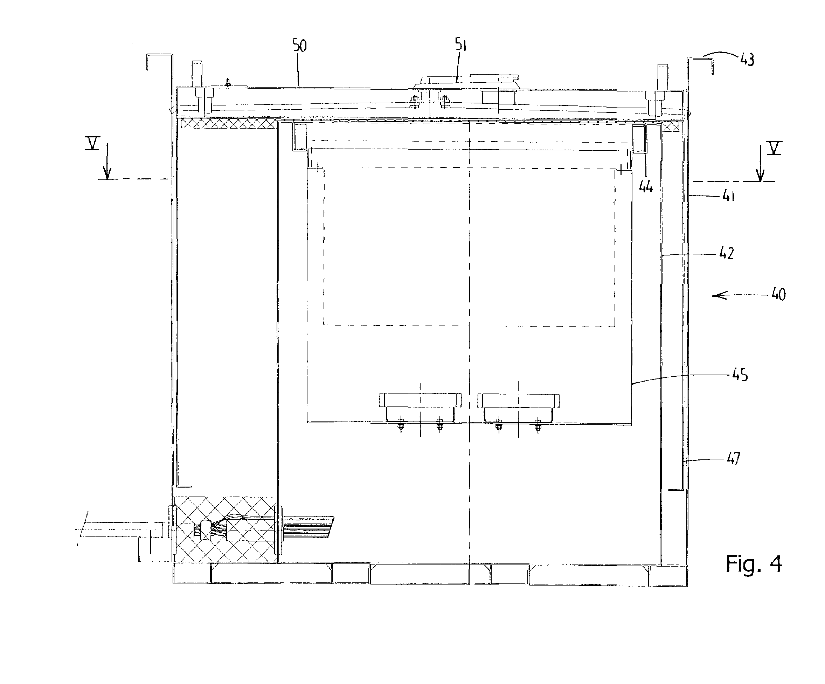

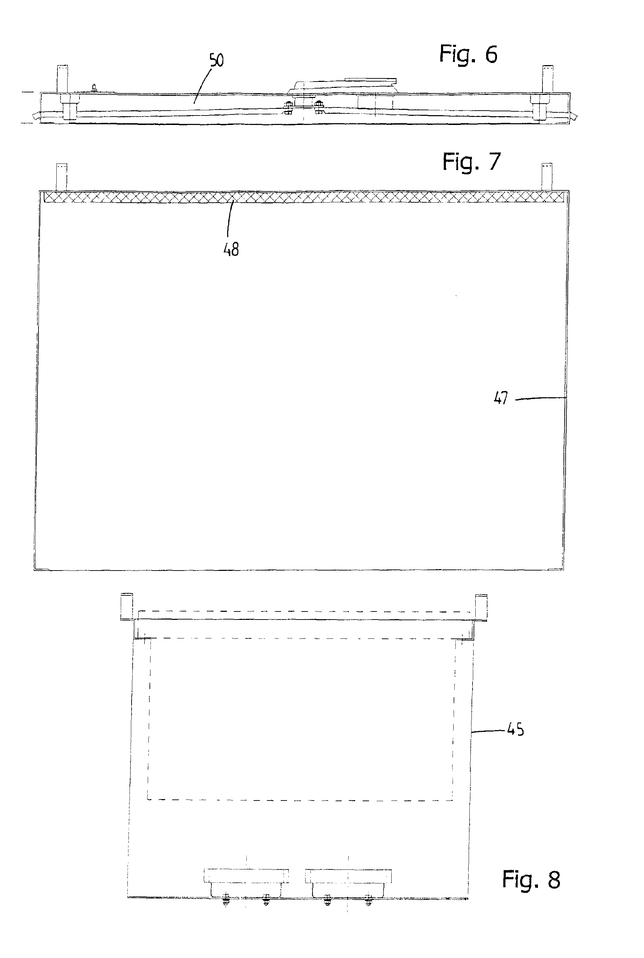

Figs. 4-8 show a preferred use of the stripped cable introduction embedded in sealing compound which has been described with reference to Figs. 1-3. The figures show a housing 40 having an outermost housing part 41 (outer shell) and an innermost housing part 42 (inner shell). The outermost housing part 41 is designed to be open at the top and comprises a flanged edge 43 which has been folded over outwards. The innermost housing part 42 is likewise designed to be open towards the top and comprises a flanged edge 44 which has bent over inwards. A shell 45 which is intended to accommodate electronic and/or electrotechnical equipment is suspended from this flanged edge 44. This shell 45 is shown separately in Fig. 8.

A covering cap 47 is positioned over the innermost housing part 42 and the shell 45. This covering cap 47 is shown separately in Fig. 7 and is designed to be closed at the top and all the way around, while its underside is largely left open. A sealing gasket 48 is provided around the inner side of the upper wall of the covering cap 47.

The covering cap 47 is delimited at the top by means of a pressure frame 50. The pressure frame 50 is shown separately in Fig. 6 and is provided with actuating means 51, via which the pressure frame 50 can on the one hand be fixed in the outermost housing part 41 and on the other hand can exert a downwardly directed force on the covering cap 47.

In this way, the innermost housing part 42 delimits an interior space which, on account of the sealing gasket 48, is closed off with a hermetic seal and which, on account of covering cap 47 acting as an air chamber, is closed off in a watertight manner from the external surroundings. This watertightness and gastightness can advantageously be ensured by the specific way of introducing the cable in accordance with the invention.

The action of the covering cap 47 as an air chamber is as follows. If the water level begins to rise from below, this water will at a certain point in time reach the bottom edge of the covering cap 47. When the water reaches this bottom edge, a quantity of air is enclosed between the covering cap 47 and the vertical walls of the innermost housing part 42. The water level will then only be able to rise a small distance further beneath the covering cap 47, since the enclosed air bubble prevents it from penetrating any further.

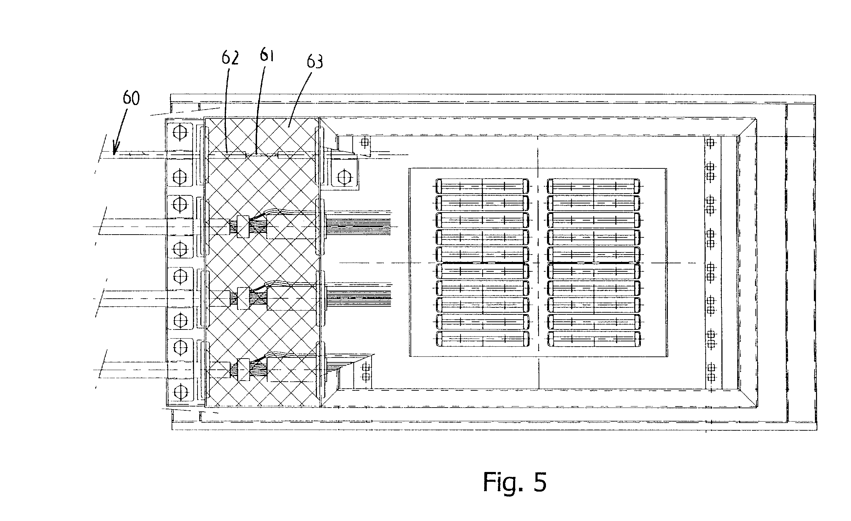

As can be seen in Fig. 5, the housing 40 comprises a cable introduction position with four cables positioned next to one another, the first three of which are of the type described with reference to Figs. 1-3, while the fourth cable 60 is of the type in which a single core 61 is surrounded by an outer sheath 62. For the cable 60 it also goes that its outer sheath 62 has been removed over a length section at the location of the cable introduction position and that a length section of the core 61 which has been exposed as a result, together with the two adjoining pieces of outer sheath 62, are embedded in sealing compound 63.

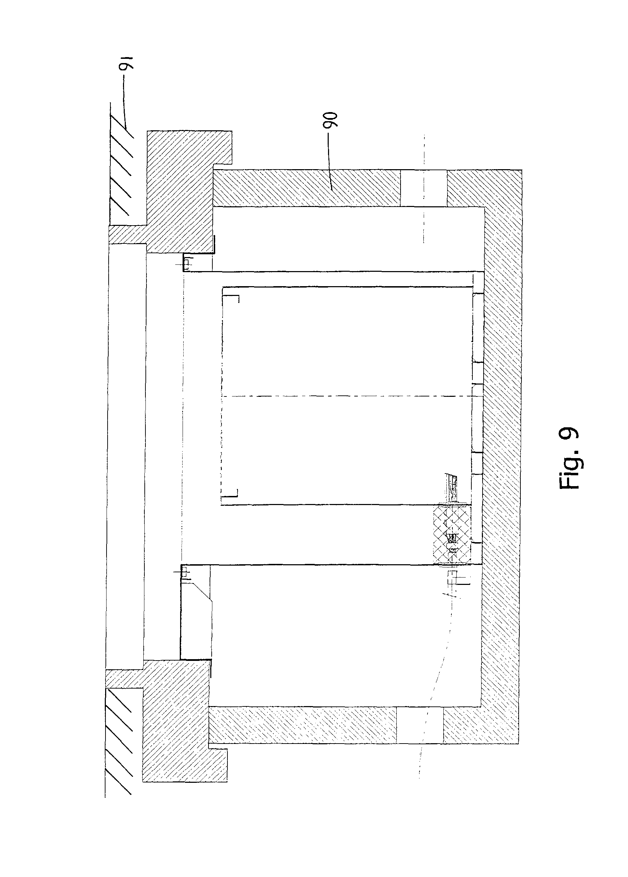

Fig. 9 shows a possible use for the housing 40 shown in Fig. 4, without the box 45, the covering cap 47 and the pressure frame 50 yet having been fitted. It can be seen that the housing 40 is accommodated in a large concrete shell 90, which shell 90 is intended to be placed at least partially in the ground 91. On account of the invention, for this application too it is advantageously possible to use a protective box with embedded stripped cable introduction. In this case, the cable introduction position may lie under water, so that when it is raining but also in the event of floods, etc., watertightness continues to be ensured.

In addition to the embodiment shown, numerous variants are possible; for example, the invention can also be used for protective boxes which are intended to be positioned above ground. It is also possible for the housing to be designed without the innermost housing part shown in Fig. 4, i.e. with an outer shell which is at least partially open from the top and in which a covering cap acting as an air chamber is directly suspended. The abovementioned cores of the cable may optionally be metal cores surrounded by an insulating sheath.

Thus, the invention provides a very reliable protective box for electronic and/or electrotechnical equipment, the watertightness and gastightness of which can also be ensured for very long periods.

## Claims

1. Protective box for electronic and/or electrotechnical equipment, comprising:
- a housing (1; 40) having an interior (2) in which the electronic and/or electrotechnical equipment is accommodated,
the housing (40) comprising an outer shell (41), which is at least partially open from the top and in particular can be closed off, and a covering cap (47), which is at least partially open from below but is closed from the top and all around, and which acts as an air chamber, which covering cap (47) can be removed via the at least partially open top side of the outer shell (41);
- at least one cable introduction position (3) which is provided in the housing (1; 40) and has a cable (4) guided through it for connection to the electronic and/or electrotechnical equipment,
the cable (4) comprising an outer sheath (5) which surrounds at least one core (6),
**characterized in that**
the outer sheath (5) has been removed from a length section of the cable (4) at the location of the cable introduction position (3), and
**in that** a length section of the outer sheath (5) and an adjoining length section of the at least one exposed core (6) are together embedded in a sealing compound (8) which adjoins the housing (1; 40) for connecting the cable (4) in a watertight and gastight manner to the electronic and/or electrotechnical equipment accommodated in the interior space (2).

2. Protective box according to claim 1 in which the cable (4) comprises an earth shield (7) which surrounds the at least one core (6), in particular a telecommunications cable,
the length section of the cable (4) from which the outer sheath (5) has been removed at the cable introduction position (3) also having had the earth shield (7) removed over a subsection of its length, and
at least one length section of the exposed earth shield (7) being also embedded in the sealing compound (8).

3. Protective box according to claim 2, in which the earth shield (7), at the location of the cable introduction position (3), is connected to an earth wire (12) having an insulation sheath and a core,
in which a length section of the earth wire (12) has had its insulation sheath removed at the location of the cable introduction position (3), and
in which a length section of the insulation sheath and an adjoining length section of the exposed core are also embedded in the sealing compound (8).

4. Protective box according to claim 2 or 3, in which there is a sleeve (14) which extends over an end section of the exposed earth shield (7) and over an adjoining length section of the at least one exposed core (6), which sleeve (14) is filled with part of the sealing compound, and which sleeve (14) is at least partially also embedded in the other part of the sealing compound (8).

5. Protective box according to one of the preceding claims, in which the housing (1) is provided, at the location of the cable introduction piston (3), with a shell (19) intended to accommodate the sealing compound (8).

6. Protective box according to one of the preceding claims, in which the sealing compound (8) is an, in particular at least partially, curable filling compound.

7. Protective box according to claim 6, in which the curable filling compound is a multicomponent potting compound, in particular based on hydrocarbon.

8. Protective box according to one of the preceding claims, in which the housing (40) also comprises an inner shell (42), which is at least partially open from above and in which the electronic and/or electrotechnical equipment is accommodated, and in which the covering cap (47) extends over the inner shell (42), leaving clear a space between wall parts extending substantially in the vertical direction.

9. Protective box according to claim 8, in which the covering cap (47) rests on a top peripheral wall section of the inner shell (42), with in particular a seal (48) provided between them.

10. Use of a protective box according to one of the preceding claims, for at least partial positioning in the ground.
